# EUROPÄISCHE PATENTANMELDUNG

(11) **EP 1 542 352 A2**
(43) Veröffentlichungstag der Anmeldung: **15.06.2005**
(21) Anmeldenummer: 04027053.0
(22) Anmeldetag: 13.11.2004
(51) Int. Cl.: H02P 7/36

(54) **Ansteuereinrichtung für einen EC-Motor**

(30) Priorität: 12.12.2003 DE 10358111
(71) Anmelder: LuK Lamellen und Kupplungsbau Beteiligungs KG, 77815 Bühl (DE)
(72) Erfinder: Zimmermann, Martin, 77880 Sasbach (DE); Martin, Jens, 76547 Sinzheim-Kartung (DE); Schweizer, Alexander, 75045 Walzbachtal-Jöhlingen (DE); Nazari, Behzad, Dr., 77830 Bühlertal (DE); Hirt, Joachim, 77704 Oberkirch (DE); Fuss, Martin, 76131 Karlsruhe (DE); Ehrlich, Matthias, 77815 Bühl (DE); Stengel, Frank, 77815 Bühl-Neusatz (DE)

(57) **Zusammenfassung**

Eine Ansteuereinrichtung für einen EC-Motor (1) hat eine Endstufe (2) und eine Steuerlogik zum Ansteuern der Endstufe (2). Die Endstufe (2) hat Stromversorgungsanschlüsse (3, 4), die über eine Halbleiterschalter (U₊, V₊, W₊, U₋, V₋, W₋) aufweisende Brückenschaltung mit Wicklungsanschlüssen (U, V, W) für den EC-Motor (1) verbunden sind. Die Halbleiterschalter (U₊, V₊, W₊, U₋, V₋, W₋) weisen Steuereingänge auf, die zum Kommutieren des EC-Motors (1) mit der Steuerlogik verbunden sind. Die Steuerlogik ist in einen Testzustand bringbar, in dem die Steuereingänge der Halbleiterschalter (U₊, V₊, W₊, U₋, V₋, W₋) entsprechend einem vorgegeben Muster angesteuert sind.

## Beschreibung

Die Erfindung betrifft eine Ansteuereinrichtung für einen EC-Motor, mit einer Steuerlogik und einer Endstufe, wobei die Endstufe Stromversorgungsanschlüsse hat, die über eine Halbleiterschalter aufweisende Brückenschaltung mit Wicklungsanschlüssen für den EC-Motor verbunden sind, und wobei die Halbleiterschalter Steuereingänge haben, die zum Kommutieren des EC-Motors mit der Steuerlogik verbunden sind.

Eine derartige Ansteuereinrichtung für einen Elektromotor, der einen Rotor mit permanentmagnetischen Polen und einen Stator mit einer mehrphasigen Wicklung aufweist, ist aus der Praxis bekannt. Die einzelnen Phasen der Wicklung werden über eine Endstufe derart angesteuert, dass sich in einem zwischen dem Stator und dem Rotor befindlichen Luftspalt ein magnetisches Wanderfeld ausbildet, das mit den am Umfang des Rotors angeordneten permanentmagnetischen Polen zur Erzeugung einer Drehbewegung des Rotors zusammenwirkt. Die Lage des Rotors relativ zu dem Stator wird mit Hilfe von Lagesensoren erfasst. Als Lagesensoren dienen Hallsensoren, die am Stator angeordnet sind und das Magnetfeld der permanentmagnetischen Rotor-Pole detektieren. Zur elektronischen Kommutierung der Wicklungsphasen entsprechend der jeweiligen Lage des Rotors sind die Lagesensoren über eine Steuerlogik mit der Endstufe verbunden. Die Endstufe weist eine Brückenschaltung mit einer der Anzahl der Phasen entsprechenden Anzahl Halbbrücken auf, die jeweils zwei in Reihe geschaltete Halbleiterschalter haben. Die Halbbrücken sind jeweils mit ihrem einen Ende mit einem positiven und mit ihrem anderen Ende mit einem negativen Pol einer Stromversorgung verbunden. Zwischen den Halbleiterschaltern weisen die Halbbrücken jeweils einen Wicklungsanschluss auf, der mit einer Phase der Motorwicklung verbunden ist. In Abhängigkeit von der Lage des Rotors relativ zu dem Stator generiert die Steuerlogik für jeden Halbleiterschalter der Brückenschaltung jeweils ein Steuersignal, das an einen Steuereingang des betreffenden Halbleiterschalters angelegt wird, derart, dass der Halbleiterschalter entsprechend einer jeweils einzustellenden Kommutierung geöffnet oder geschlossen wird. Die Ansteuereinrichtung ermöglicht eine bürstenlose und somit nahezu verschleißfreie Kommutierung des Elektromotors. Ein Nachteil des aus der Ansteuereinrichtung und dem Elektromotor bestehenden elektrischen Antriebs besteht jedoch noch darin, dass im Falle eines elektrischen Defekts an dem Antrieb die Fehlersuche bei einer Reparatur noch relativ zeitaufwändig und mühsam ist, da in der Regel nicht ohne Weiteres erkennbar ist, ob der Elektromotor oder die Ansteuereinrichtung defekt ist.

Es besteht deshalb die Aufgabe, eine Ansteuereinrichtung der eingangs genannten Art zu schaffen, die für den Fall, dass an dem EC-Motor oder der Ansteuereinrichtung einmal ein elektrischer Defekt auftreten sollte, eine einfache Fehlerdiagnose ermöglicht.

Die Lösung dieser Aufgabe besteht darin, dass die Steuerlogik in einen Testzustand bringbar ist, in dem die Steuereingänge der Halbleiterschalter entsprechend einem vorgegeben Muster angesteuert sind.

In vorteilhafter Weise werden also in dem Testzustand die Steuereingänge der Halbleiterschalter entsprechend einem vorgegebenen, von dem an den Eingangsanschlüssen anliegenden Lagemesssignal unabhängigen Muster angesteuert, was eine einfache Fehlerdiagnose der Endstufe beispielsweise in einer Servicewerkstatt ermöglicht. Zum Auffinden des Fehlers können bei abgeschalteter Stromversorgung der Endstufe im Testmodus die elektrischen Widerstände zwischen den Wicklungsanschlüssen gemessen und mit Sollwerten verglichen werden. Anhand des Ergebnisses dieses Vergleichs kann dann auf die Fehlerursache, wie zum Beispiel einen Kurzschluss einer Wicklungsspule gegen einen Pol der Stromversorgung und/oder einen defekten Halbleiterschalter rückgeschlossen werden.

Vorteilhaft ist, wenn parallel zu den Wicklungsanschlüssen hochohmige elektrische Prüfwiderstände angeschlossen sind, wenn eine Messeinrichtung zur Messung eines Stromflusses in den Prüfwiderständen vorgesehen ist, wenn ein Messsignalausgang der Messeinrichtung zum Vergleichen eines an ihm anliegenden Messsignals mit einem Sollwertbereich an einer Vergleichseinrichtung angeschlossen ist, und wenn ein Ausgang der Vergleichseinrichtung mit einem Eingang eines Fehlerspeichers und/oder einer Anzeige verbunden ist. In vorteilhafter Weise sind also in die Ansteuereinrichtung Mittel integriert, die es ermöglichen, Fehler in der Ansteuereinrichtung oder dem EC-Motor aufzudecken. In Abhängigkeit von dem Muster ist es beim Auftreten eines Defekts sogar möglich, festzustellen, ob ein interner Fehler in der Ansteuereinrichtung vorliegt oder ob es sich um einen externen Fehler handelt, wie z.B. einem Kurzschluss der Wicklung eines mit den Wicklungsanschlüssen verbundenen EC-Motors gegen einen Pol der Stromversorgung. Gegebenenfalls kann sogar zwischen unterschiedlichen Fehlern in der Endstufe oder dem EC-Motor unterschieden werden. Da für die Testfunktion nur einige wenige Standardbauteile benötigt werden, ist die Ansteuereinrichtung kostengünstig herstellbar. Unter einem hochohmigen Prüfwiderstand wird ein elektrischer Widerstand verstanden, dessen Widerstandswert wesentlich größer ist als der Widerstand der Wicklung des EC-Motors, so dass bei einer Parallelschaltung einer Wicklungsphase mit einem Prüfwiderstand die zusätzliche Last über den Prüfwiderstand vernachlässigt werden kann.

Bei einer vorteilhaften Ausführungsform der Erfindung ist die Steuerlogik in einen ersten Testzustand bringbar ist, in dem an den Steuereingängen sämtlicher Halbleiterschalter der Brückenschaltung jeweils ein der Offenstellung des betreffenden Halbleiterschalters zugeordneter Signalpegel anliegt. Dabei darf unabhängig davon, ob an den Wicklungsanschlüssen der Endstufe eine EC-Motor angeschlossen ist oder nicht, in den Prüfwiderständen kein Strom fließen. Im Falle eines Kurzschlusses einer mit den Wicklungsanschlüssen verbundenen Wicklung gegen einen Pol einer mit den Stromversorgungsanschlüssen verbundenen Stromversorgung kommt es dagegen zu einem Stromfluss in den Prüfwiderständen, was mit Hilfe der Messeinrichtung detektiert wird, woraufhin ein Fehler in dem Fehlerspeicher eingetragen wird.

Besonders vorteilhaft ist, wenn der Ausgang des Fehlerspeichers zum Sperren der Bestromung der Wicklung beim Auftreten eines Fehlers mit der Steuerlogik verbunden ist. Dabei wird nach dem Einschalten der Ansteuereinrichtung vorzugsweise zunächst der erste Testzustand eingestellt, um einen eventuellen Kurzschluss zwischen der Wicklung und einem Pol der Stromversorgung zu detektieren. Wird während des ersten Testzustands ein Kurzschluss detektiert, wird die Bestromung der Wicklung gesperrt. Wenn kein Kurzschluss festgestellt wird, wird die Bestromung der Wicklung freigegeben.

Vorteilhaft ist, wenn die Steuerlogik zum Testen der Schaltfunktion eines Halbleiterschalters in mindestens einen zweiten Testzustand bringbar ist, in dem an dem Steuereingang des betreffenden Halbleiterschalters ein der Schließstellung des Halbleiterschalters zugeordneter Signalpegel und an den übrigen Halbleiterschaltern jeweils ein der Offenstellung dieser Halbleiterschafter zugeordneter Signalpegel anliegt, und wenn die Vergleichseinrichtung derart ausgebildet ist, dass sie in dem zweiten Testzustand das Messsignal mit einem zweiten Sollwertbereich vergleicht, der dem zu testenden Halbleiterschalter und dem zweiten Testzustand zugeordnet ist. Dabei ist es sogar möglich, dass die Steuereinrichtung derart ausgebildet ist, dass eine der Anzahl der Halbleiterschalter bzw. der Anzahl der Brückenzweige der Brückenschaltung entsprechende Anzahl zweiter Zustände einstellbar ist, bei denen jeweils unterschiedliche Halbleiterschalter angesteuert werden. Somit ist es möglich, die Halbleiterschalter nacheinander einzelnen anzusteuern, um zu überprüfen, ob sie sich öffnen und schließen lassen. Dabei kann dieser Test sowohl bei mit der Ansteuereinrichtung verbundenem EC-Motor als auch bei von der Ansteuereinrichtung getrenntem EC-Motor durchgeführt werden.

Zweckmäßigerweise ist die Steuerlogik zum Testen der Schaltfunktionen von in unterschiedichen Brückenzweigen einer Halbbrücke der Brückenschaltung angeordneten Halbleiterschaltern in mindestens einen dritten Testzustand bringbar ist, in dem an den Steuereingängen dieser Halbleiterschalter jeweils ein der Schließstellung des betreffenden Halbleiterschalters zugeordneter Signalpegel anliegt, wobei die Vergleichseinrichtung derart ausgebildet ist, dass sie in dem dritten Testzustand das Messsignal mit einem dritten Sollwertbereich vergleicht, welcher der betreffenden Halbbrücke und dem dritten Testzustand zugeordnet ist. Die Halbleiterschafter werden also bei Belastung getestet, was eine noch genauere Diagnose der Endstufe ermöglicht. Bei diesem Test ist der EC-Motor an der Ansteuereinrichtung angeschlossen. Der Test wird zweckmäßigerweise durchgeführt, wenn der EC-Motor ausgebaut oder von einer Antriebswelle abgekuppelt ist, um eine Gefährdung durch das während des Tests an dem EC-Motor auftretende Drehmoment zu vermeiden.

Vorteilhaft ist, wenn die Steuerlogik eine Pulsweitenmodulationseinrichtung mit verstellbarem Puls-Pausenverhältnis aufweist, die jeweils zumindest mit dem Steuereingang eines der Hableiterschalter der einzelnen Halbbrücken verbunden ist, und wenn die Steuerlogik derart ausgebildet ist, dass in dem dritten Testzustand das Puls-Pausenverhältnis kleiner als 40%, gegebenenfalls kleiner als 35% und bevorzugt kleiner als 30% ist. Der Test des EC-Motors erfolgt also mit einer gegenüber der Versorgungsspannung der Stromversorgung reduzierten mittleren elektrischen Spannung, so dass auch für den Fall, dass während des Test einer der Halbleiterschalter Defekt sein sollte, die übrigen Halbleiterschalter der Endstufe und/oder der EC-Motor nicht unzulässig stark belastet werden.

Bei einer bevorzugten Ausführungsform der Erfindung ist eine der Anzahl der Wicklungsanschlüsse entsprechende Anzahl Prüfwiderstände derart im Stern geschaltet, dass die einzelnen Prüfwiderstände jeweils mit ihrem einen Anschluss an einem ihnen zugeordneten Wicklungsanschluss und mit ihrem anderen Anschluss an einem Stempunkt angeschlossen sind, wobei die Messeinrichtung mit dem Sternpunkt verbunden ist. Dadurch ergibt sich ein besonders einfacher und kostengünstiger Aufbau der Ansteuereinrichtung.

Zweckmäßigerweise ist der Sternpunkt über ein Sperrfilter mit der Messeinrichtung verbunden, wobei das Sperrfilter auf eine in dem dritten Testzustand auftretende Pulsmoduhtionsfrequenz abgestimmt ist. Die durch die Pulsweitenmodulation verursachten Schwankungen in dem Messsignal werden also herausgefiltert, d.h. das Messsignal wird geglättet. Dadurch wird eine noch größere Präzision bei der Diagnose der Ansteuereinrichtung und/oder des EC-Motors ermöglicht.

Bei einer vorteilhaften Ausgestaltung der Erfindung weist die Steuerlogik einen Mikroprozessor auf, wobei die Messeinrichtung einen A/D-Konverter hat, der mit dem Mikroprozessor verbunden und vorzugsweise mit diesem auf einem Halbleiterchip integriert ist. Die Steuerlogik und die Messeinrichtung sind also als integrierte Schaltung ausgebildet und können dadurch in Serienfertigung kostengünstig hergestellt werden.

Bei einer vorteilhaften Ausführungsform der Erfindung ist eine elektrische Schaltung vorgesehen, die zum Ansteuern von mindestens zwei EC-Motoren wenigstens zwei der Ansteuereinrichtungen aufweist, wobei die Schattung einen Strommesser zur Messung der Stromaufnahme der Endstufen und eine mit dem Strommesser verbundene Vergleichseinrichtung zum Vergleichen eines Stromaufnahmemesswertes mit einem Sollwertbereich umfasst, wobei die Vergleichseinrichtung zum Abschalten der Stromzufuhr zu den Wicklungsanschlüssen der einzelnen Ansteuereinrichtungen beim Auftreten einer Abweichung zwischen dem Stromaufnahmemesswert und dem Sollwertbereich mit einer Abschalteinrichtung verbunden ist. Die aus der Abschalteinrichtung, dem Strommesser und der Vergleichseinrichtung gebildete Schutzschaltung sollte, um die Reaktionszeit kurz zu halten, möglichst hardwaremäßig ausgelegt sein. Sie könnte aus Kostengründen in einem Steuergerät unabhängig von der Anzahl der EC-Motoren nur einmalig (je im Plus- und Massepfad) vorgesehen sein. Im Falle einer Aktivierung würden dann alle Endstufen schlagartig hochohmig geschaltet und das Steuergerät vor Zerstörung geschützt.

Vorteilhaft ist, wenn die Abschalteinrichtung derart ausgebildet ist, dass die Steuereinrichtungen beim Auftreten einer Abweichung zwischen dem Stromaufnahmemesswert und dem Sollwertbereich in den ersten und/oder zweiten Testzustand gebracht werden. Da die Schutzschaltung dazu dient, die Ansteuereinrichtungen bei einem Fehler, der außerhalb der Ansteuereinrichtungen auftritt, vor Beschädigung oder Zerstörung zu schützen und ein solcher Schutz nur bei intakten Ansteuereinrichtungen sinnvoll ist, brauchen nur die Fälle berücksichtigt zu werden, bei denen nach dem Auftreten des Fehlers die Steuereinrichtungen und die Endstufen weiterhin funktionsfähig sind, so dass durch Öffnen der Halbleiterschalter der Stromfluss zu den EC-Motoren unterbrochen werden kann. Gegebenenfalls kann dann bei aktiviertem Testzustand dann auch gleich automatisch festgestellt werden, welcher EC-Motor bzw. welcher Motor-Pol und/oder welche die Endstufe mit dem EC-Motor verbindende Zuleitung einen Kurzschluss aufweist. Eine entsprechende Ersatzstrategie kann dann einen Notlauf einleiten. Dabei könnte z.B. ein Kraftfahrzeug mit einem Parallelschaltgetriebe, das zwei Kupplungen aufweist (PSG-System), im Falle eines kurzgeschlossenen Kupplungsmotors im Notlauf nur noch eine Kupplung benutzt werden, um mit dem Fahrzeug im Notlaufbetrieb weiterfahren zu können.

Nachfolgend ist ein Ausführungsbeispiel der Erfindung anhand der Zeichnung näher erläutert.

Es zeigen:
Fig. 1 ein Teilschaltbild einer an einem EC-Motor angeschlossenen Ansteuereinrichtung, die mit der Wicklung des EC-Motors verbundene Prüfwiderstände zum Testen ihrer Endstufe aufweist,
Fig. 2 ein Ersatzschaltbild einer aus den Prüfwiderständen und einem Spannungsteiler bestehenden elektrischen Teilschaltung beim Auftreten eines Masseschlusses in der Wicklung des EC-Motors und
Fig. 3 ein Ersatzschaltbild der Teilschaltung beim Auftreten eines Kurzschlusses gegen den Pluspol der Stromversorgung.

Eine Ansteuereinrichtung für einen EC-Motor 1 weist eine Endstufe 2 und eine in der Zeichnung nicht näher dargestellte Steuerlogik zum Ansteuern der Endstufe 2 auf. Die Steuerlogik hat Eingangsanschlüsse zum Verbinden mit Lagesensoren, welche die Lage des EC-Motor-Läufers relativ zum Stator des EC-Motors messen.

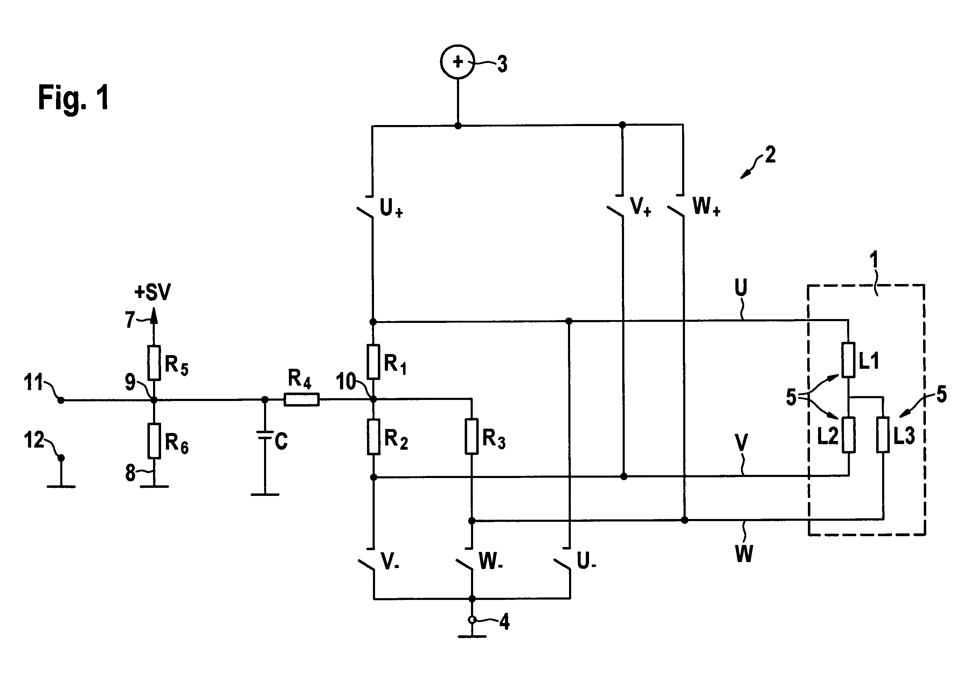

In Fig. 1 ist erkennbar, dass die Endstufe eine Brückenschaltung mit einer der Anzahl der Phasen des EC-Motors 1 entsprechenden Anzahl Halbbrücken aufweist. Die Halbbrücken haben jeweils einen in Fig. 1 oben angeordneten ersten Brückenzweig und einen zweiten, in Fig. 1 unten angeordneten Brückenzweig. Die beiden Brückenzweige jeder Halbbrücke sind jeweils mit ihrem einen Ende mit einem Wicklungsanschluss U, V, W des EC-Motors 1 und mit ihrem anderen Ende mit Stromversorgungsanschlüssen 3, 4 verbunden. Ein erster Stromversorgungsanschluss 3 ist mit dem Pluspol und ein zweiter Stromversorgungsanschluss mit dem Minuspol einer Stromquelle verbunden. Die Stromquelle kann beispielsweise eine Leerlaufspannung von 13 Volt aufweisen.

Die Wicklung des EC-Motors ist im Stern geschaltet. Jeweils ein Ende jeder Wicklungsphase 5 ist an einem Wicklungssternpunkt 6 und das andere Ende an einem der Wicklungsanschlüsse U, V, W angeschlossen.

In jedem Brückenzweig ist jeweils ein Halbleiterschalter U₊, V₊, W₊, U₋, V₋, W₋ angeordnet, der als Transistor mit einem in der Zeichnung nicht näher dargestellten Steuereingang ausgebildet ist. Die Steuereingänge sind zum Ansteuern der Halbleiterschalter U₊, V₊, W₊, U₋, V₋, W₋ mit der Steuerlogik verbunden.

Die Steuerlogik ist zwischen einem Betriebsmodus und einem Testmodus umschaltbar. Im Betriebsmodus erzeugt die Steuerlogik in Abhängigkeit von Lagemesssignalen Ansteuersignale, die in an sich bekannter Weise zum Kommutieren des EC-Motors an den Steuereingängen der Halbleiterschalter U₊, V₊, W₊, U₋, V₋, W₋ anliegen. Die Ansteuersignale der Halbleiterschalter U₊, V₊, W₊ der mit dem Stromversorgungsanschluss 3 verbundenen Brückenzweige sind pulsweitenmoduliert. In dem Testmodus werden die Steuereingänge mit einem vorgegeben, von den Lagemesssignalen unabhängigen Signalmuster angesteuert.

Die Wicklungsanschlüsse U, V, W sind über hochohmige elektrische Prüfwiderstände R₁, R₂, R₃, die beispielsweise einen Wert von 1 k• aufweisen können, über ein Sperrfilter und einen Spannungsteiler mit einem ersten Pol 7 einer Prüfspannungsquelle verbunden. Die elektrische Spannung der Prüfspannungsquelle ist kleiner ist als die Spannung zwischen den Stromversorgungsanschlüssen 3, 4. Die Spannung der Prüfspannungsquelle wird mit Hilfe eines Spannungsreglers aus der zwischen den Stromversorgungsanschlüssen 3, 4 anliegenden Spannung erzeugt.

Der Pol 7 ist über einen hochohmigen Spannungsteiler mit einem zweiten Pol 8 der Prüfspannungsquelle verbunden, der an dem Stromversorgungsanschluss 4 angeschlossen ist. Ein erster Spannungsteilerwiderstand R₅ ist mit seinem einen Anschluss an dem Pol 7 und mit seinem anderen Anschluss an einem Knoten 9 angeschlossen. Ein zweiter Spannungsteilerwiderstand R₆ ist mit seinem einen Anschluss an dem Knoten 9 und mit seinem anderen Anschluss an dem zweiten Pol 8 der Prüfspannungsquelle angeschlossen. Die Spannungsteilerwiderstände R₅, R₆ können beispielsweise einen elektrischen Widerstand von 100 k• aufweisen. Die Spannung der Prüfspannungsquelle kann beispielsweise 5 V betragen.

In Fig. 1 ist erkennbar, dass die Prüfwiderstände R₁, R₂, R₃ im Stern geschaltet sind, wobei die einzelnen Prüfwiderstände R₁, R₂, R₃ jeweils mit ihrem einen Anschluss an einem ihnen zugeordneten Wicklungsanschluss U, V, W und mit ihrem anderen Anschluss an einem Sternpunkt 10 angeschlossen sind. Der Stempunkt 10 ist über das Sperrfilter mit dem Knoten 9 verbunden. Das Sperrfilter weist einen ohmschen Widerstand R₄ und einen Kondensator C auf. Der Widerstand R₄ ist mit seinem einen Anschluss mit dem Sternpunkt 10 und mit seinem anderen Anschluss mit dem Knoten 9 verbunden. Der Widerstand R₄ kann einen Wert von 10 k• und der Kondensator C eine Kapazität von 220 nF aufweisen.

Der Knoten 9 ist mit einem ersten Eingangsanschluss 11 einer durch einen A/D-Konverter gebildeten Messeinrichtung verbunden, die zur Messung eines Stromflusses in den Prüfwiderständen R₁, R₂, R₃ dient. Ein zweiter Eingangsanschluss 12 der Messeinrichtung ist an dem zweiten Pol 8 der Prüfspannungsquelle angeschlossen.

Ein Messsignalausgang der Messeinrichtung ist zum Vergleichen des der zwischen den Eingangsanschlüssen 11, 12 anliegenden elektrischen Spannung Messsignals mit Sollwertbereichen an einer Vergleichseinrichtung angeschlossen ist, die in einem Mikroprozessor angeordnet ist. Dem Mikroprozessor ist ein Datenspeicher zugeordnet, in dem Daten für die Sollwertbereiche abgelegt sind. Zum Vergleichen der mit Hilfe der Messeinrichtung erfassten Messsignale mit den Sollwertbereichen werden die Daten für die Sollwertbereiche jeweils aus dem Datenspeicher in eine Recheneinheit des Mikroprozessors geladen. Der Datenspeicher weist außerdem einen Speicherbereich auf, der als Fehlerspeicher dient. Wenn bei dem Vergleich des Messsignals mit einem Sollwertbereich eine Abweichung des Messsignals von dem Sollwertbereich festgestellt wird, wird in dem Fehlerspeicher eine Fehlermeldung abgelegt. Der Fehlerspeicher weist eine Schnittstelle zum Verbinden mit einer Anzeige auf, an dem die Fehlermeldung(en) zur Anzeige gebracht werden können. Die Anzeige kann beispielsweise ein Computermonitor sein. Es ist aber auch denkbar, dass die Anzeige eine in die Ansteuereinrichtung integrierte Leuchtdiode ist.

Der Mikroprozessor wird auch für die Steuerlogik genutzt. Der Mikroprozessor ist dazu mit einem Programmspeicher verbunden, in dem ein Betriebsprogramm zur Ansteuerung der Halbleiterschalter U₊, V₊, W₊, U₋, V₋, W₋ abgelegt ist.

Nach dem Einschalten der Ansteuereinrichtung wird die Steuerlogik in dem Testmodus zunächst in einen ersten Testzustand gebracht, in dem an den Steuereingängen sämtlicher Halbleiterschalter U₊, V₊, W₊, U₋, V₋, W₋ der Brückenschaltung jeweils ein der Offenstellung des betreffenden Halbleiterschalters U₊, V₊, W₊, U₋, V₋, W₋ zugeordneter Signalpegel anliegt. Dann wird mit Hilfe der Messeinrichtung ein Messsignal für die an dem zweiten Spannungsteilerwiderstand anliegende, von dem Stromfluss in den Prüfwiderständen R₁, R₂, R₃ abhängige Spannung erfasst und mit einem ersten Sollwertbereich verglichen. Wenn alle Halbleiterschalter U₊, V₊, W₊, U₋, V₋, W₋ funktionsfähig sind und der EC-Motor von den Wicklungsanschlüssen U, V, W getrennt ist, sind die Prüfwiderstände R₁, R₂, R₃ stromlos. Ebenso, wenn der EC-Motor an den Wicklungsanschlüssen U, V, W angeschlossen ist und kein Kurzschluss der Wicklung gegen einen der Stromversorgungsanschlüsse 3, 4 vorliegt. Zwischen den Eingangsanschlüssen 11, 12 liegt somit eine durch die Ausgangsspannung der Prüfspannungsquelle und die Spannungsteilerwiderstände R₅, R₆ vorgegebene Spannung an. Das Messsignal liegt in diesem Fall innerhalb des ersten Sollwertbereichs.

Weist dagegen die Wicklung aufgrund eines Defekts in dem EC-Motor oder der Zuleitung zu dem EC-Motor einen Kurzschluss gegen einen der Stromversorgungsanschlüsse 3, 4 auf oder liegt ein Kurzschluss in einem der Halbleiterschalter U₊, V₊, W₊, U₋, V₋, W₋ vor, weicht das Messsignal von dem ersten Sollwertbereich ab.

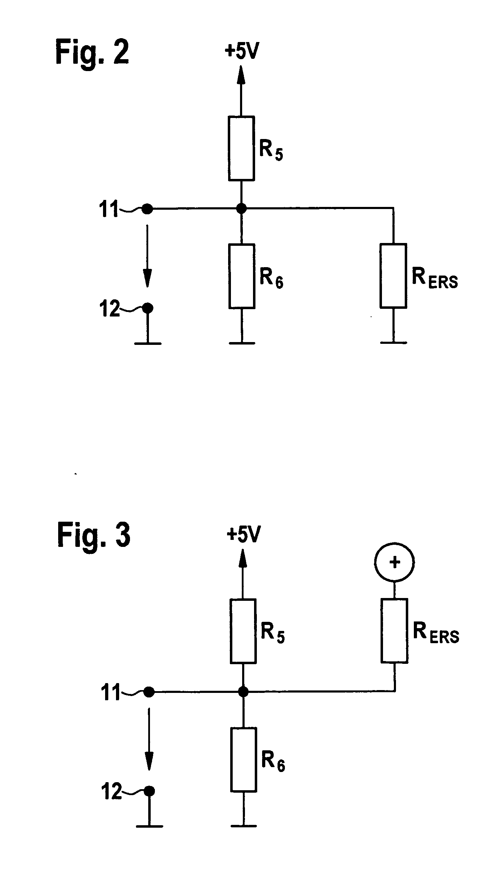

Fig. 2 zeigt das Ersatzschaltbild für die zwischen den Eingangsanschlüssen 11, 12 der Messeinrichtung anliegende elektrische Schaltung beim Auftreten eines Kurzschlusses der Wicklung gegen den zweiten Stromversorgungsanschluss 4. Deutlich ist erkennbar, dass der Ersatzwiderstand R_{ERS}, welcher der aus den Prüfwiderständen R₁, R₂, R₃ und der Wicklung gebildeten Teilschaltung entspricht, zu dem ersten Spannungsteilerwiderstand R₅ parallel geschaltet ist. Dadurch wird das Potential an dem ersten Eingangsanschluss 11 derart angehoben, dass das Messsignal außerhalb des ersten Sollwertbereichs liegt.

Fig. 3 zeigt das Ersatzschaltbild für die zwischen den Eingangsanschlüssen 11, 12 der Messeinrichtung anliegende elektrische Schaltung beim Auftreten eines Kurzschlusses der Wicklung gegen den ersten Stromversorgungsanschluss 3. In diesem Fall ist der Ersatzwiderstand R_{ERS}, welcher der aus den Prüfwiderständen R₁, R₂, R₃ und der Wicklung gebildeten Teilschaltung entspricht, zu dem ersten Spannungsteilerwiderstand R₅ parallel geschaltet. Dadurch wird das Potential an dem ersten Eingangsanschluss 11 derart abgesenkt, dass das Messsignal außerhalb des ersten Sollwertbereichs liegt.

Wenn in dem ersten Testzustand eine Abweichung zwischen dem Messsignal und dem ersten Sollwertbereich festgestellt wird, wird in dem Fehlerspeicher ein Fehler eingetragen und die Bestromung der Wicklung wird gesperrt. Dies kann beispielsweise in der Weise erfolgen, dass die an den Steuereingängen der Halbleiterschalter U₊, V₊, W₊, U₋, V₋, W₋ anliegenden, der Offenstellung der Halbleiterschalter zugeordneten Signalpegel gegen Verändern gesperrt werden.

Wird in dem ersten Testzustand dagegen kein Fehler festgestellt, wird die Steuerlogik zum Testen der Schaltfunktion der einzelnen Halbleiterschalter U₊, V₊, W₊, U₋, V₋, W₋ in eine der Anzahl der Halbleiterschalter entsprechende Anzahl zweiter Testzustände gebracht, in denen an dem Steuereingang des jeweils zu testenden Halbleiterschalters U₊, V₊, W₊, U₋, V₋, W₋ jeweils ein der Schließstellung des Halbleiterschalters U₊, V₊, W₊, U₋, V₋, W₋ zugeordneter Signalpegel und an den übrigen Halbleiterschalter U₊, V₊, W₊, U₋, V₋, W₋ jeweils ein der Offenstellung dieser Halbleiterschalter U₊, V₊, W₊, U₋, V₋, W₋ zugeordneter Signalpegel anliegt. In jedem dieser Testzustände wird jeweils mit Hilfe der Messeinrichtung mindestens ein Messwert erfasst und mit einem dem betreffenden Testzustand zugeordneten Sollwertbereich verglichen. Bei Auftreten einer Abweichung zwischen dem Messwert und dem Sollwertbereich wird in dem Fehlerspeicher ein dem betreffenden Testzustand zugeordneter Fehler eingetragen. Die zweiten Testzustände können sowohl bei mit den Wicklungsanschlüssen U, V, W verbundener Wicklung als auch bei von den Wicklungsanschlüssen U, V, W getrennter Wicklung durchgeführt werden. Im zweiten Testzustand kann das Puls-Pausenverhältnis der Ansteuersignale für die Halbleiterschalter U₊, V₊, W₊ 100% betragen.

Aus der untenstehenden Tabelle ist die Zuordnung zwischen den Sollwertbereichen und den an den Steuereingängen der Halbleiterschalter U₊, V₊, W₊, U₋, V₋, W₋ anliegenden Ansteuersignalen für ein Ausführungsbeispiel ersichtlich. Dabei sind die zweiten Testzustände mit 2.1, 2.2, 2.3 u.s.w. bezeichnet. Die an den Steuereingängen der einzelnen Halbleiterschalter U₊, V₊, W₊, U₋, V₋, W₋ anliegenden Signalpegel sind mit "0" und "1" bezeichnet, wobei "0" den der Offenstellung und "1" den der Schließstellung des Halbleiterschalters U₊, V₊, W₊, U₋, V₋, W₋ zugeordneten Signalpegel bezeichnet.

| Testzustand | Ansteuerung Halbleiterschalter | | | | | | Sollwertbereich in Volt |
|---|---|---|---|---|---|---|---|
| | U₊ | V₊ | W₊ | U₋ | V₋ | W₋ | |
| 1 | 0 | 0 | 0 | 0 | 0 | 0 | 2-3 |
| 2.1 | 1 | 0 | 0 | 0 | 0 | 0 | >4 |
| 2.2 | 0 | 1 | 0 | 0 | 0 | 0 | |
| 2.3 | 0 | 0 | 1 | 0 | 0 | 0 | |
| 2.4 | 0 | 0 | 0 | 1 | 0 | 0 | <1 |
| 2.5 | 0 | 0 | 0 | 0 | 1 | 0 | |
| 2.6 | 0 | 0 | 0 | 0 | 0 | 1 | |
| 3.1 | PWM | 0 | 0 | 0 | 1 | 0 | drehzahlabhängig |
| 3.2 | 0 | PWM | 0 | 0 | 0 | 1 | |
| 3.3 | 0 | 0 | PWM | 1 | 0 | 0 | |

Wird in dem zweiten Testzustand kein Fehler festgestellt, kann die Steuerlogik bei Bedarf in eine der Anzahl der Halbbrücken entsprechende Anzahl dritter Testzustände gebracht werden, die in der obigen Tabelle mit 3.1, 3.2 und 3.3 bezeichnet sind. In jedem dieser Testzustände entspricht die Ansteuerung der Halbleiterschalter U₊, V₊, W₊, U₋, V₋, W₋ jeweils einem Kommutierungszustand, d.h. es liegt jeweils an dem Steuereingang eines Halbleiterschalters U₊, V₊, W₊ einer mit dem ersten Pol 3 verbundenen Halbbrücke und an dem Steuereingang eines Halbleiterschalters U₋, V₋, W₋ einer mit dem zweiten Pol 4 verbundenen Halbbrücke der der Offenstellung zugeordnete Signalpegel und an den übrigen Halbleiterschaltern der der Schließstellung zugeordnete Signalpegel an. In dem dritten Testzustand ist die Wicklung des EC-Motors 1 mit den Wicklungsanschlüssen U, V, W verbunden, um die Halbleiterschalter U₊, V₊, W₊, U₋, V₋, W₋ bei Belastung zu testen.

In den dritten Testzuständen können die Ansteuersignale der Halbleiterschalter U₊, V₊, W₊ pulsweitenmoduliert (PWM) sein, wobei das Puls-Pausenverhältnis kleiner als 100% ist und bevorzugt etwa 30% beträgt. Die an den Wicklungsanschlüssen U, V, W anliegende mittlere Spannung reduziert sich dadurch entsprechend, so dass an dem EC-Motor während der Kommutierung nur ein relativ kleines Drehmoment auftreten kann. Damit die durch die Pulsweitenmodulation an dem Sternpunkt 10 auftretenden Spannungsschwankungen nicht zu Mess-Ungenauigkeiten führen, ist der Sternpunkt 10 über das den Widerstand R₄ und den Kondensator C aufweise Sperrfilter mit der Messeinrichtung verbunden. Das Sperrfenster des Sperrfilters ist auf die Pulsmodulationsfrequenz abgestimmt.

Erwähnt werden soll noch, dass die in der obigen Tabelle aufgeführten Testzustände nur ein Beispiel darstellen, und dass eine Fehlerdiagnose der Endstufe und/oder des EC-Motors auch mit Testzuständen, bei denen die Halbleiterschalter U₊, V₊, W₊, U₋, V₋, W₋ anders angesteuert werden als dies in der Tabelle angegeben ist, möglich ist. Die Ansteuereinrichtung ermöglicht es, im Fehlerfall auf einfache Weise festzustellen, welcher der Halbleiterschalter U₊, V₊, W₊, U₋, V₋, W₋ defekt ist und/oder ob und gegebenenfalls gegen welchen Stromversorgungsanschluss 3,4 die Wicklung des EC-Motors 1 einen Kurzschluss aufweist.

In einer weiteren vorteilhaften Ausgestaltung der Ansteuereinrichtung erfolgt zur Diagnose des Systems ein so genanntes "Rückwärtslesen" des Tastverhäftnisses der Pulsweitenmodulation (PWM). Ein Spannungspegel ist hier bei einwandfreiem Betrieb des Systems proportional zum Tastverhältnis (Tastverhältnis von 0 bis 100%). Die Plausibilität der einander zugeordneten Größen Spannungspegel und Tastverhältnis wird hierbei von einem Mikro-Controller kontrolliert.

Diese Überprüfung kann beispielsweise in der Weise erfolgen, indem die Zeiten der High- und der Low-Pegel gemessen und mit den Zeiten des Soll-Signals verglichen werden. In einer weiteren Ausgestaltung der Erfindung wird das zurück gelesene Signal als Analog-Signal über einen A/D-Wandler (optional gefiltert über ein PT1-Glied) erfasst. Dabei muss man bei einem sich ändernden PWM-Signal eine Verzögerungszeit in der Signalüberprüfung zulassen: Der Vorteil bei dieser Lösung besteht darin, dass für die Signalprüfung keinerlei Zusatzhardware erforderlich ist, sofern die oben beschriebene Diagnosebeschaltung bereits vorhanden ist.

### Bezugszeichenliste

- 1: EC-Motor
- 2: Endstufe
- 3: erster Stromversorgungsanschluss
- 4: zweiter Stromversorgungsanschluss
- 5: Wicklungsphase
- 6: Wicklungssternpunkt
- 7: erster Pol
- 8: zweiter Pol
- 9: Knoten
- 10: Sternpunkt
- 11: erster Eingangsanschluss
- 12: zweiter Eingangsanschluss
- R₁, R₂, R₃: Prüfwiderstand
- R₅: erster Spannungsteilerwiderstand
- R₆: zweiter Spannungsteilerwiderstand
- R_{ERS}: Ersatzwiderstand
- U, V, W: Wicklungsanschluss
- U₊, V₊, W₊: Halbleiterschalter
- U₋, V₋, W₋: Halbleiterschalter

## Patentansprüche

1. Ansteuereinrichtung für einen EC-Motor (1), mit einer Steuerlogik und einer Endstufe (2), wobei die Endstufe (2) Stromversorgungsanschlüsse (3, 4) hat, die über eine Halbleiterschalter (U₊, V₊, W₊, U₋, V₋, W₋) aufweisende Brückenschaltung mit Wicklungsanschlüssen (U, V, W) für den EC-Motor (1) verbunden sind, und wobei die Halbleiterschalter (U₊, V₊, W₊, U₋, V₋, W₋) Steuereingänge haben, die zum Kommutieren des EC-Motors (1) mit der Steuerlogik verbunden sind, **dadurch gekennzeichnet, dass** die Steuerlogik in einen Testzustand bringbar ist, in dem die Steuereingänge der Halbleiterschalter (U₊, V₊, W₊, U₋, V₋, W₋) entsprechend einem vorgegeben Muster angesteuert sind.

2. Ansteuereinrichtung nach Anspruch 1, **dadurch gekennzeichnet, dass** parallel zu den Wicklungsanschlüssen (U, V, W) hochohmige elektrische Prüfwiderstände (R₁, R₂, R₃) angeschlossen sind, dass eine Messeinrichtung zur Messung eines Stromflusses in den Prüfwiderständen (R₁, R₂, R₃) vorgesehen ist, dass ein Messsignalausgang der Messeinrichtung zum Vergleichen eines an ihm anliegenden Messsignals mit einem Sollwertbereich an einer Vergleichseinrichtung angeschlossen ist, und dass ein Ausgang der Vergleichseinrichtung mit einem Eingang eines Fehlerspeichers und/oder einer Anzeige verbunden ist.

3. Ansteuereinrichtung nach Anspruch 1 oder 2, **dadurch gekennzeichnet, dass** die Steuerlogik in einen ersten Testzustand bringbar ist, in dem an den Steuereingängen sämtlicher Halbleiterschalter (U₊, V₊, W₊, U₋, V₋, W₋) der Brückenschaltung jeweils ein der Offenstellung des betreffenden Halbleiterschalters (U₊, V₊, W₊, U₋, V₋, W₋) zugeordneter Signalpegel anliegt.

4. Ansteuereinrichtung nach einem der Ansprüche 1 bis 3, **dadurch gekennzeichnet, dass** der Ausgang des Fehlerspeichers zum Sperren der Bestromung der Wicklung beim Auftreten eines Fehlers mit der Steuerlogik verbunden ist.

5. Ansteuereinrichtung nach einem der Ansprüche 1 bis 4, **dadurch gekennzeichnet, dass** die Steuerlogik zum Testen der Schaltfunktion eines Halbleiterschalters (U₊, V₊, W₊, U₋, V₋, W₋) in mindestens einen zweiten Testzustand bringbar ist, in dem an dem Steuereingang des betreffenden Halbleiterschalters (U₊, V₊, W₊, U₋, V₋, W₋) ein der Schließstellung des Halbleiterschalters (U₊, V₊, W₊, U₋, V₋, W₋) zugeordneter Signalpegel und an den übrigen Halbleiterschaltern (U₊, V₊, W₊, U₋, V₋, W₋) jeweils ein der Offenstellung dieser Halbleiterschalter (U₊, V₊, W₊, U₋, V₋, W₋) zugeordneter Signalpegel anliegt, und dass die Vergleichseinrichtung derart ausgebildet ist, dass sie in dem zweiten Testzustand das Messsignal mit einem zweiten Sollwertbereich vergleicht, der dem zu testenden Halbleiterschalter (U₊, V₊, W₊, U₋, V₋, W₋) und dem zweiten Testzustand zugeordnet ist.

6. Ansteuereinrichtung nach einem der Ansprüche 1 bis 5, **dadurch gekennzeichnet, dass** die Steuerlogik zum Testen der Schaltfunktionen von in unterschiedlichen Brückenzweigen einer Halbbrücke der Brückenschaltung angeordneten Halbleiterschaltern (U₊, V₊, W₊, U₋, V₋, W₋) in mindestens einen dritten Testzustand bringbar ist, in dem an den Steuereingängen dieser Halbleiterschalter (U₊, V₊, W₊, U₋, V₋, W₋) jeweils ein der Schließstellung des betreffenden Halbleiterschalters (U₊, V₊, W₊, U₋, V₋, W₋) zugeordneter Signalpegel anliegt, und dass die Vergleichseinrichtung derart ausgebildet ist, dass sie in dem dritten Testzustand das Messsignal mit einem dritten Sollwertbereich vergleicht, welcher der betreffenden Halbbrücke und dem dritten Testzustand zugeordnet ist.

7. Ansteuereinrichtung nach einem der Ansprüche 1 bis 6, **dadurch gekennzeichnet, dass** die Steuerlogik eine Pulsweitenmodulationseinrichtung mit verstellbarem Puls-Pausenverhältnis aufweist, die jeweils zumindest mit dem Steuereingang eines der Halbleiterschalter (U₊, V₊, W₊, U₋, V₋, W₋) der einzelnen Halbbrücken verbunden ist, und das die Steuerlogik derart ausgebildet ist, dass in dem dritten Testzustand das Puls-Pausenverhältnis kleiner als 40%, gegebenenfalls kleiner als 35% und bevorzugt kleiner als 30% ist.

8. Ansteuereinrichtung nach einem der Ansprüche 1 bis 7, **dadurch gekennzeichnet, dass** eine der Anzahl der Wicklungsanschlüsse (U, V,W) entsprechende Anzahl Prüfwiderstände (R₁, R₂, R₃) derart im Stern geschaltet ist, dass die einzelnen Prüfwiderstände (R₁, R₂, R₃) jeweils mit ihrem einen Anschluss an einem ihnen zugeordneten Wicklungsanschluss (U, V, W) und mit ihrem anderen Anschluss an einem Stempunkt (12) angeschlossen sind, und dass die Messeinrichtung mit dem Stempunkt (12) verbunden ist.

9. Ansteuereinrichtung nach einem der Ansprüche 1 bis 8, **dadurch gekennzeichnet, dass** der Stempunkt (12) über ein Sperrfilter mit der Messeinrichtung verbunden ist, und dass das Sperrfilter auf eine in dem dritten Testzustand auftretende Pulsmodulationsfrequenz abgestimmt ist.

10. Ansteuereinrichtung nach einem der Ansprüche 1 bis 9, **dadurch gekennzeichnet, dass** die Steuerlogik einen Mikroprozessor aufweist, und dass die Messeinrichtung einen A/D-Konverter hat, der mit dem Mikroprozessor verbunden und vorzugsweise mit diesem auf einem Halbleiterchip integriert ist.

11. Elektrische Schaltung, die zum Ansteuern von mindestens zwei EC-Motoren wenigstens zwei der Ansteuereinrichtungen nach einem der Ansprüche 1 bis 10 aufweist, mit einer Überwachungseinrichtung, die einen Strommesser zur Messung der Stromaufnahme der Endstufen (2) und eine mit dem Strommesser verbundene Vergleichseinrichtung zum Vergleichen eines Stromaufnahmemesswertes mit einem Sollwertbereich umfasst, wobei die Vergleichseinrichtung zum Abschalten der Stromzufuhr zu den Wicklungsanschlüssen (U, V, W) der einzelnen Ansteuereinrichtungen beim Auftreten einer Abweichung zwischen dem Stromaufnahmemesswert und dem Sollwertbereich mit einer Abschalteinrichtung verbunden ist.

12. Elektrische Schaltung nach Anspruch 11, **dadurch gekennzeichnet, dass** die Abschalteinrichtung derart ausgebildet ist, dass die Steuereinrichtungen beim Auftreten einer Abweichung zwischen dem Stromaufnahmemesswert und dem Sollwertbereich in den ersten und/oder zweiten Testzustand gebracht werden.

13. Elektrische Schaltung nach mindestens einem der Ansprüche 1 bis 12, **dadurch gekennzeichnet, dass** ein so genanntes "Rückwärtslesen" stattfindet, d.h. dass das Tastverhältnis der Pulsweitenmodulation mit dem Spannungspegel verglichen wird.

14. Elektrische Schaltung nach Anspruch 13, **dadurch gekennzeichnet, dass** die Zeiten der High- und der Low-Pegel mit den Zeiten des Sollsignals verglichen werden.

15. Elektrische Schaltung nach Anspruch 13, **dadurch gekennzeichnet, dass** das zurück gelesene Signal zunächst erst als Analogsignal erfasst und dann erst über einen /D-Wandler geleitet wird.
